# EUROPEAN PATENT SPECIFICATION

(11) **EP 3 201 974 B1**
(45) Date of publication and mention of the grant of the patent: **21.11.2018**
(21) Application number: 15763767.9
(22) Date of filing: 03.09.2015
(51) Int. Cl.: H01M 2/10, H01M 2/12, H01M 10/6563

(54) **BATTERY MODULE**
BATTERIEMODUL
MODULE DE BATTERIE

(30) Priority: 30.09.2014 US 201414501295
(43) Date of publication of application: 09.08.2017
(73) Proprietor: Google LLC, Mountain View, CA 94043 (US)
(72) Inventor: BLANCO, Richard Lidio, Mountain View, California 94043 (US); ALEXANDER, Dave, Mountain View, California 94043 (US); DAILEY, William Leslie, Mountain View, California 94043 (US); GOW, Philippe H., Mountain View, California 94043 (US)
(74) Representative: Boult Wade Tennant LLP
(86) International application number: PCT/US2015/048283
(87) International publication number: WO 2016/053570

(56) References cited:
- WO-A1-2013/122005
- US-A1- 2010 239 892
- US-A1- 2012 037 624

## Description

### TECHNICAL FIELD

This disclosure relates to a battery module and, more particularly, to a battery module for one or more power cells that includes a flame arrestor.

### BACKGROUND

Power cells, such as lithium-ion cells, are popular types of rechargeable cells, being characterized by high energy densities, no memory effect and slow loss of charge while being in idle state. Due to their advantages, lithium-ion cells are common not only in consumer electronics, but also in military, electric vehicle, and aerospace applications. The performance of lithium-ion cells is dependent on both the temperature and the operating voltage. One concern of lithium-ion cells is the existence of a number of failure mechanisms that can trigger a catastrophic failure and, subsequently, a combustion event of flammable fluid, such as electrolyte fluid. Indeed, the failure of lithium-ion cells can involve the discharge of corrosive, conductive, and flammable electrolyte as well as the discharge of a small amount of molten aluminum through a vent member of the lithium-ion cells that can affect the equipment in which they are installed. Such a discharge can result in the combustion event, in which the flammable fluid combusts to cause a fire in the packaging of the power cells, that could spread to other packages and beyond.

### SUMMARY

This disclosure describes implementations of a battery module that, in some aspects, includes one or more flame arrestor sub-assemblies. In some implementations, a battery module with one or more flame arrestor sub-assemblies may prevent or substantially impede a flow of combusted fluid (e.g., gas, liquid, multiphase fluid, vapor, or otherwise) and/or flames from exiting the battery module to an ambient environment. In some aspects, each flame arrestor positioned within the battery module may allow a cooling airflow to pass therethrough, e.g., to cool one or more power cells and/or other heat generating components within the battery module, while preventing or impeding the combusted fluid and/or flames from passing therethrough. In some aspects, by preventing or impeding the combusted fluid and/or flames from exiting the battery module, further damage to other adjacent battery modules or other equipment may be minimized or prevented.

In an example general implementation, a battery module includes a housing that defines an inner volume and includes an airflow path from an aperture formed in a first end member of the housing, through the inner volume, and to an aperture formed in a second end member of the housing; a plurality of power cells mounted in the inner volume of the housing, each of the power cells including a vent member at an end of the power cell; and a flame arrestor mounted across the airflow path and between the plurality of power cells and the aperture formed in the second end member of the housing. The flame arrestor includes a screen that includes a plurality of fluid pathways sized to allow an airflow from the airflow path through the fluid pathways and sized to impede a combusted fluid to pass therethrough.

A first aspect combinable with the general implementation further includes a fan mounted in the housing to circulate the airflow between the aperture formed in the first end member of the housing and the aperture formed in a second end member of the housing.

In a second aspect combinable with any of the previous aspects, the plurality of power cells are directionally mounted in the inner volume such that the vent members face an offset direction relative to at least one of the aperture formed in the first end member or the aperture formed in the second end member of the housing.

In a third aspect combinable with any of the previous aspects, the flame arrestor further includes a frame that is attachable to the housing, the screen mounted within the frame.

In a fourth aspect combinable with any of the previous aspects, the frame includes a through hole that forms a cable pathway between sides of the flame arrestor.

In a fifth aspect combinable with any of the previous aspects, the screen includes a first screen, the flame arrestor further including a second screen mounted within the frame in substantial parallel with the first screen.

In a sixth aspect combinable with any of the previous aspects, the second screen includes a plurality of second fluid pathways, and at least a portion of the second fluid pathways are different sizes than a portion of the fluid pathways of the first screen.

In a seventh aspect combinable with any of the previous aspects, the flame arrestor includes a first flame arrestor.

In an eighth aspect combinable with any of the previous aspects, the module further includes a second flame arrestor mounted across the airflow path and between the plurality of power cells and the aperture formed in the first end member of the housing.

In a ninth aspect combinable with any of the previous aspects, the second flame arrestor includes a screen that includes a plurality of fluid pathways sized to allow an airflow from the airflow path through the fluid pathways and sized to impede a combusted fluid to pass therethrough.

In a tenth aspect combinable with any of the previous aspects, the plurality of power cells include a plurality of lithium-ion batteries.

In an eleventh aspect combinable with any of the previous aspects, each of the lithium-ion batteries includes a form factor 18650 lithium-ion battery.

In another example general implementation, a method of managing a combustion event in a battery module includes positioning a battery module in a data center, the battery module including a housing with a first end member and a second end member, and a plurality of power cells mounted in the housing, each of the power cells including a vent member at an end of the power cell; circulating an airflow from an aperture in the first end member, through an inner volume of the housing to cool the plurality of power cells, and to an aperture in the second end member; circulating the airflow through a flame arrestor mounted within the housing and between the plurality of power cells and the aperture formed in the second end member of the housing; and impeding, with the flame arrestor, a combusted fluid from passing through the housing to an ambient environment in the data center.

A first aspect combinable with the general implementation further includes circulating the airflow with a fan mounted in the housing.

In a second aspect combinable with any of the previous aspects, the airflow is circulated through natural convection.

In a third aspect combinable with any of the previous aspects, circulating the airflow through a flame arrestor includes circulating the airflow through a screen mounted within a frame of the flame arrestor.

In a fourth aspect combinable with any of the previous aspects, the screen includes a first screen, the method further including circulating the airflow through a second screen mounted within the frame substantial parallel with the first screen.

In a fifth aspect combinable with any of the previous aspects, the flame arrestor includes a first flame arrestor.

A sixth aspect combinable with any of the previous aspects further includes circulating the airflow through a second flame arrestor mounted within the housing and between the plurality of power cells and the aperture formed in the first end member of the housing; and impeding, with the second flame arrestor, the combusted fluid from passing through the housing to the ambient environment in the data center.

In another example general implementation, a power system includes a plurality of battery modules electrically coupled to form a power unit configured to provide electrical power to a plurality of rack-mounted electronic devices in a data center. At least one of the battery modules includes a case at least partially open to an ambient environment on ends of the case and defining a fluid path between the ends of the case; a plurality of power cells mounted in the case; and a fan mounted in the case to circulate an airflow through the fluid path to cool the plurality of power cells; and a first screen mounted across the fluid path and between the plurality of power cells and one of the ends of the case, the first screen including a plurality of openings sized to allow the airflow to pass therethrough and impede a combusted fluid to pass therethrough.

In a first aspect combinable with the general implementation, the battery module further includes a second screen mounted across the fluid path and between the plurality of power cells and the other of the ends of the case.

In a second aspect combinable with any of the previous aspects, the second screen includes a plurality of openings sized to allow the airflow to pass therethrough and impede the combusted fluid to pass therethrough.

In a third aspect combinable with any of the previous aspects, the battery module further includes a heat shield positioned within the fluid path and extending between the ends of the case.

In a fourth aspect combinable with any of the previous aspects, the heat shield extends between the first and second screens within the case.

In a fifth aspect combinable with any of the previous aspects, the battery module further includes a battery management system positioned within the fluid path between the first screen and the one of the ends of the case.

Various implementations of a battery module according to the present disclosure may include one or more of the following features. For example, the battery module may prevent a combustion event (e.g., combustion of flammable fluid, such as power cell electrolyte, within the battery module) from spreading to nearby or adjacent battery modules. As another example, the battery module may prevent or minimize a flame or combusted fluid from extending beyond the module. In some examples, the battery module may contain (all or mostly) combustion of flammable fluids within the module. Further, the battery module may prevent (all or partially) a secondary burning or combustion from occurring outside of the module (e.g., outside of a defined burn volume). As another example, the battery module may provide for convective cooling of one or more power cells within the module while also minimizing and/or preventing a combustion event from extending beyond the module. As a further example, the battery module may control or help control (or direct) output of a combustion event to or through a defined exit of the battery module. The example implementations of the battery module may also redundantly prevent or help prevent a combustion event from spreading to nearby or adjacent battery modules. The example implementations of the described battery module may also prevent or help prevent damage to internal components of the module during a combustion event.

These general and specific aspects may be implemented using a device, system, method, or any combinations of devices, systems, or methods. The details of one or more implementations are set forth in the accompanying drawings and the description below. Other features, objects, and advantages will be apparent from the description and drawings, and from the claims.

### BRIEF DESCRIPTION OF THE DRAWINGS

FIGS. 1A-1D illustrate schematic top, side, front and end views of an example battery module;
FIGS. 2A-2B illustrate schematic top and end views of another example battery module;
FIG. 3 illustrates a schematic top view of another example battery module;
FIGS. 4A-4D illustrate example implementations of a flame arrestor sub-assembly used in a battery module; and
FIG. 5 illustrates a flow chart for a method of managing a combustion event in a battery module.

### DETAILED DESCRIPTION

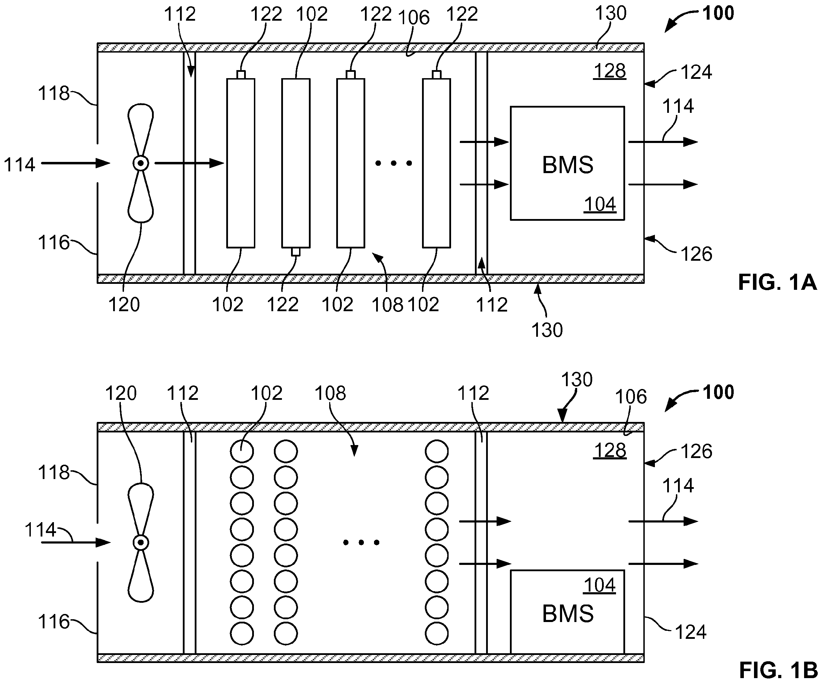

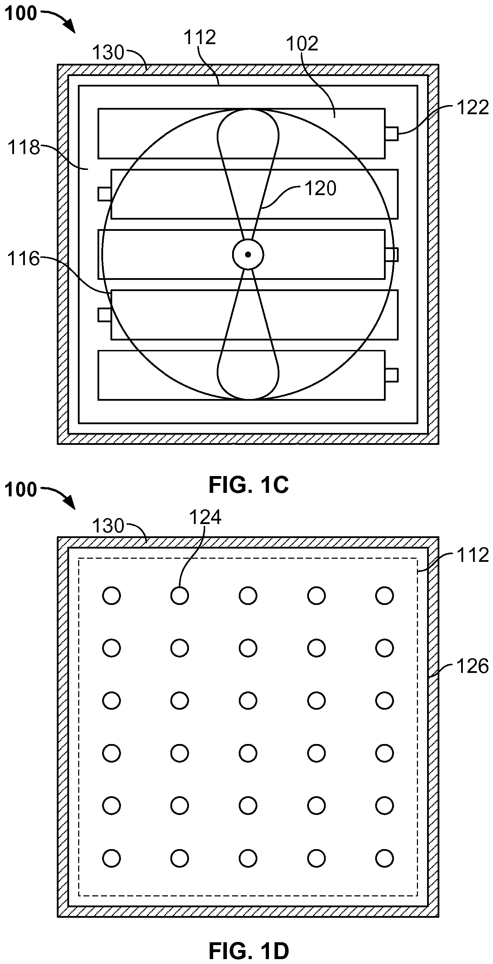

The present disclosure describes a battery module that, in some aspects, includes one or more flame arrestors to prevent or reduce an outflow of combusted fluid from the module in case of a combustion event (e.g., one or more flammable fluids, such as oxygen, electrolyte, or otherwise, combusting due to overheating in the module). FIG. 1A shows a schematic top view of a battery module 100. In general, the battery module 100 includes and encloses a plurality of power cells 102 and a battery management system (BMS) 104 in a controlled environment.

The battery module 100, in some aspects, may maintain the power cells 102 and BMS 104 at particular environmental conditions (e.g., temperature and otherwise), such as ambient conditions, suitable for operation. For example, the illustrated battery module 100 includes cooling equipment and power supply equipment, such as an electrical connection electrically coupled to the plurality of power cells 102 and exposed to an exterior of the housing 106. In some examples, the battery module 100 can be a LiFePO₄ battery pack, a LiCoO₂ battery pack, a LiMnNi battery pack, a LiNiMnCo battery pack, or other suitable battery pack for inclusion in various types of equipment, such as data centers, electric vehicles, and hybrid vehicles. In some examples, each power cell 102 of a suitable battery pack can be a form factor 18650 lithium-ion battery.

The battery module 100 includes a housing 106 that defines an inner volume 108, a plurality of power cells 102 mounted in the inner volume 108 of the housing 106 and flame arrestors 112. The housing 106 can be formed of non-inflammable materials, such as metal alloys having a high melting point. The housing 106 that defines the inner volume 108 also includes an airflow path. The housing 106 receives an outside airflow 114, through an aperture 116 formed in a first end member 118 of the housing 106. The outside airflow 114, in this example, is circulated by a fan 120, which generates supply airflow (e.g., a cooling airflow) for the inner volume 108, as illustrated in FIGS. 1A-1C.

The fan 120 can circulate the generated airflow through a front flame arrestor 112 to the inner volume 108. The airflow is circulated around power cells 102 within the inner volume 108. Each power cell 102 has a substantially cylindrical shape defined by a diameter of a body of the power cell 102 and a length of the body. The airflow 114 is circulated past the plurality of power cells 102, through a back flame arrestor 112 and then to an auxiliary volume 128 that encloses the BMS 104. The airflow 114 may then be circulated through one or more apertures 124 of the end member 126 and into an ambient environment.

Each power cell 102 includes a vent member 122 at an end of the power cell 102. The vent member 122 can enable thermal energy dissipation. For example, the vent member 122 may allow for a single release of high internal pressures, which may arise from an internal short circuit of the power cell 102 or from excessive heating of the cell 102. The vent member 122 may also indirectly aid in thermal dissipation, for instance, as a secondary function.

The power cells 102 in this example implementation are directionally mounted in the inner volume 108 such that the vent members 122 face an offset direction relative to at least one of the apertures 116 formed in the first end member 118 or the aperture 124 formed in the second end member 126 of the housing 106. In some implementations, the vent members 122 are oriented oppositely in every other row (or column) so that, for multiple venting accidents, the liquid (e.g., flammable electrolyte) is distributed more evenly within the volume 108 (e.g., and does not pool). This opposite orientation may also facilitate ease of electrical interconnection between the power cells 102. The axis of each body of the power cells 102 can also be substantially orthogonal to the airflow path defined between the fan 120 and the second end member 126. The combination of the orientation of the power cells 102 (vents orthogonal to apertures) and the barrier 112 may create a circuitous path for a leaking fluid between the vents and the apertures 124, decreasing the risk of a fluid escaping the housing 106 or reaching BMS 104.

As the airflow is circulated between the power cells 102, heat is transferred from the power cells 102 to the airflow. In some implementations, as illustrated in FIG. 1B, the power cells 102 can be arranged in a particular configuration that forms spacing between cell bodies. For example a distance of approximately 2-3 mm between adjacent power cells 102 can enable heat transfer from power cells 102 to the air to substantially reduce adjacent cell heating. In some implementations, an amount of heat generated by the power cells 102 and transferred to the airflow may be related to, for example, a temperature of the airflow relative to a temperature of the devices, a flow rate of the airflow, and a density of the power cells 102.

The airflow 114 can exit the inner volume 108 through the back flame arrestor 112 to regulate the temperature in the auxiliary volume 128 that includes BMS 104. BMS 104 is an electronic system that manages the power cells 102, such as by protecting the power cells 102 from operating in critical conditions. BMS 104 can monitor the state of the power cells 102, calculating secondary data, reporting that data, controlling the environment, authenticating data and balancing data. For example, BMS 104 can control the environment of the battery module 100 by monitoring the temperature of the air exhausted from the inner volume 108. The air can exit the auxiliary volume 128 through the apertures 124 formed in the second end member 126 of the housing 106, as illustrated in FIG ID. In some implementations, the second end member 126 is also designed as a barrier, such that the apertures 124 have a geometry and arrangement that enable the exit of the air flow but prevent a damage of an external environment in case a power cell 102 fails.

The battery module 100 can further include an air gap between an inner surface of the housing 106 and each of the plurality of power cells 102, in which a thermal insulation material 130 is mounted. For example, the thermal insulation material 130 can be added to a side, top or bottom of the housing 106 to insulate the housing 106 in the event of an internal or external failure to significantly reduce heat transfer in and out of the battery to, for instance, prevent event propagation and/or limit heat flow into the housing 106 from an adjacent housing 106. In some implementations, the thermal insulation material 130 can be a ceramic medium layer, such as an aluminum-oxide ceramic that has a higher heat conductance coefficient than the molding compound of the housing 106. The thermal insulation material 130 can also be characterized by high thermal shock resisting performance to maintain the integrity of the battery module 100, after a failure of a power cell 102 that can induce an abrupt raise in temperature.

Although a front and back flame arrestor 112 are shown in this example, alternative implementations may include only one of the flame arrestors 112 (e.g., either the front or the back flame arrestor 112) or may include more than two flame arrestors 112 (e.g., an additional arrestor 112 between the BMS 104 and the second end member 126 or redundant flame arrestors 112 within the housing 106). Alternative implementations may include two flame arrestors 112, with one of the flame arrestors 112 mounted near the fan 120 and another flame arrestor 112 mounted between the BMS 104 and the second end member 126. Generally, each of the flame arrestors 112 may include or be a screening member (e.g., mesh, screen, woven material, perforated sheet, porous element, and/or wire pad) that prevents or substantially impedes a flow of combusted fluid (e.g., a flame) from passing therethrough. The flame arrestor 112 may be made of ceramic, metal, or other material with an appropriate melting point and smoke rating. The screening member includes apertures that allow an uncombusted airflow, such as airflow 114, to pass through while still preventing or impeding a flow of combusted fluid. The combusted fluid, in some aspects, may be electrolyte solution from the plurality of power cells 102 that has leaked from the vent members 122 and combusted due to a temperature condition (e.g., overheating) in the module 100. In some aspects, the combusted fluid may also include oxygen (e.g., as an oxidant) in the airflow 114 that combines with the electrolyte solution (e.g., the combustion fuel).

In some aspects, the flame arrestor 112 may also prevent and/or impede a spread of flame within and/or beyond the housing 106 by removing energy from the flame. For example, energy may be removed from the flame by heat transfer from the flame to the flame arrester 112. The flame arrestor 112, for instance, may be lower in temperature relative to the flame and, as a good thermal conductor, may extinguish the conflagration.

In some aspects, the flame arrestors 112 may be positioned in the housing 106, and the housing 106 may be designed such that sufficient volume is available within the housing to allow substantially complete combustion of the flammable fluid to occur during electrolyte venting. For example, by including sufficient volume within the housing (e.g., between the flame arrestors 112) to allow for complete combustion, secondary burning of flammable fluids outside of the boundaries of the housing (and in some aspects outside of the volume bounded by the flame arrestors 112) is minimized or prevented.

As illustrated in FIGS. 1A-1B, exits of the battery module 100 are minimized and are bounded by the flame arrestors 112. For instance, a front exit (or entrance) to the battery module 100 is the aperture 116 that allows airflow 114 to be circulated into the module 100 by the fan 120. Here, the front flame arrestor 112 forms a pass-through barrier (e.g., to allow airflow but impede combusted fluids) between the aperture 116 and, for instance, the plurality of power cells 102. Also, a back exit (or entrance) to the battery module 100 is the aperture(s) 124 that allows airflow 114 to be circulated out of the module 100 by the fan 120. Here, the back flame arrestor 112 forms a pass-through barrier (e.g., to allow airflow but impede combusted fluids) between the aperture(s) 124 and, for instance, the plurality of power cells 102.

As shown in FIGS. 1A-1B, there are two flame arrestors 112 mounted within the battery module 100. In some implementations, the flame arrestors 112 may be designed to influence a flow of a combusted fluid within the volume 108. For instance, each flame arrestor 112 may be designed with a particular or unique flame flow resistance. For example, based on a size and/or number of apertures through each particular flame arrestor 112, a flame flow resistance unique to each particular flame arrestor 112 may be designed.

In some aspects, flame arrestors 112 having different flame flow resistances may be placed in particular locations within the battery module 100 to influence a flow of flame or combusted fluid. For example, a flame arrestor 112 with a relatively low flame flow resistance may be placed neat a front of the battery module 100 (e.g., near the fan 120), while a flame arrestor 112 with a relatively high flame flow resistance may be placed neat a rear of the battery module 100 (e.g., near the BMS 104). In such a scenario, flame or combusted fluid may be influenced (e.g., due to pressure differences within the volume 108 due to the different flame flow resistances) to move toward a front of the battery module 100. Likewise, a flame arrestor 112 with a relatively high flame flow resistance may be placed neat a front of the battery module 100 (e.g., near the fan 120), while a flame arrestor 112 with a relatively low flame flow resistance may be placed neat a rear of the battery module 100 (e.g., near the BMS 104). In such a scenario, flame or combusted fluid may be influenced (e.g., due to pressure differences within the volume 108 due to the different flame flow resistances) to move toward a rear of the battery module. 100

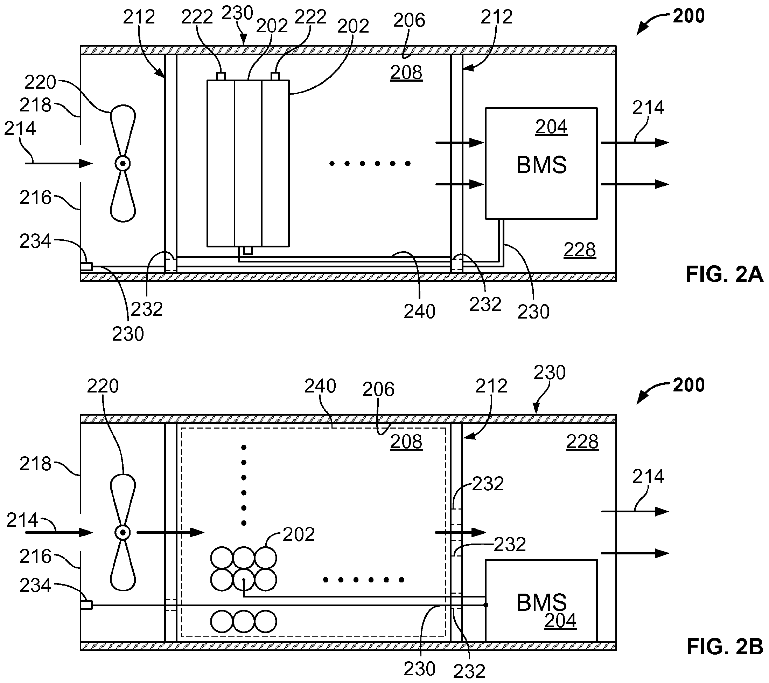

FIGS. 2A-2B illustrate schematic top and end views of another example battery module 200. FIG. 2A shows a schematic top view of a battery module 200. In general, the battery module 200 includes and encloses a plurality of power cells 202 and a battery management system (BMS) 204 in a controlled environment. The battery module 200, in some aspects, may maintain the power cells 202 and BMS 204 at particular environmental conditions (e.g., temperature and otherwise), such as ambient conditions, suitable for operation. For example, the illustrated battery module 200 includes cooling equipment and power supply equipment, such as an electrical connection electrically coupled to the plurality of power cells 202 and exposed to an exterior of the housing 206. In some examples, the battery module 200 can be a LiFePO₄ battery pack, a LiCoO₂ battery pack, a LiMnNi battery pack, a LiNiMnCo battery pack, or other suitable battery pack for inclusion in various types of equipment, such as data centers, electric vehicles, and hybrid vehicles. In some examples, each power cell 202 of a suitable battery pack can be a form factor 18650 lithium-ion battery.

The battery module 200 includes a housing 206 that defines an inner volume 208, a plurality of power cells 202 mounted in the inner volume 208 of the housing 206 and flame arrestors 212. The housing 206 can be formed of non-inflammable materials, such as metal alloys having a high melting point. The housing 206 that defines the inner volume 208 also includes an airflow path. The housing 206 receives an outside airflow 214, through an aperture 216 formed in a first end member 218 of the housing 206. The outside airflow 214, in this example, is circulated by a fan 220, which generates supply airflow (e.g., a cooling airflow) for the inner volume 208, as illustrated in FIGS. 2A-2B.

The fan 220 can circulate the generated airflow through a front flame arrestor 212 to the inner volume 208. The airflow is circulated around power cells 202 within the inner volume 208. Each power cell 202 has a substantially cylindrical shape defined by a diameter of a body of the power cell 202 and a length of the body. The airflow 214 is circulated past the plurality of power cells 202, through a back flame arrestor 212 and then to an auxiliary volume 228 that encloses the BMS 204. The airflow 214 may then be circulated through one or more apertures 224 of the end member 226 and into an ambient environment.

Each power cell 202 includes a vent member 222 at an end of the power cell 202. The vent member 222 can enable thermal energy dissipation. For example, the vent member 222 may allow for a single release of high internal pressures, which may arise from an internal short circuit of the power cell 202 or from excessive heating of the cell 202. The vent member 222 may also indirectly aid in thermal dissipation, for instance, as a secondary function.

The power cells 202 in this example implementation are directionally mounted in the inner volume 208 such that the vent members 222 face an offset direction relative to at least one of the apertures 216 formed in the first end member 218 or the aperture 224 formed in the second end member 226 of the housing 206. In some implementations, the vent members 222 are oriented oppositely in every other row (or column) so that, for multiple venting accidents, the liquid (e.g., flammable electrolyte) is distributed more evenly within the volume 208 (e.g., and does not pool). This opposite orientation may also facilitate ease of electrical interconnection between the power cells 202. The axis of each body of the power cells 202 can also be substantially orthogonal to the airflow path defined between the fan 220 and the second end member 226. The combination of the orientation of the power cells 202 (vents orthogonal to apertures) and the barrier 212 may create a circuitous path for a leaking fluid between the vents and the apertures 224, decreasing the risk of a fluid escaping the housing 206 or reaching BMS 204.

As the airflow is circulated between the power cells 202, heat is transferred from the power cells 202 to the airflow. In some implementations, as illustrated in FIG. 2B, the power cells 202 can be arranged in a particular configuration that forms spacing between cell bodies. For example a distance of approximately 2-3 mm between adjacent power cells 202 can enable heat transfer from power cells 202 to the air to substantially reduce adjacent cell heating. In some implementations, an amount of heat generated by the power cells 202 and transferred to the airflow may be related to, for example, a temperature of the airflow relative to a temperature of the devices, a flow rate of the airflow, and a density of the power cells 202.

The airflow 214 can exit the inner volume 208 through the back flame arrestor 212 to regulate the temperature in the auxiliary volume 228 that includes BMS 204. BMS 204 is an electronic system that manages the power cells 202, such as by protecting the power cells 202 from operating in critical conditions. BMS 204 can monitor the state of the power cells 202, calculating secondary data, reporting that data, controlling the environment, authenticating data and balancing data. For example, BMS 204 can control the environment of the battery module 200 by monitoring the temperature of the air exhausted from the inner volume 208. The air can exit the auxiliary volume 228 through the apertures 224 formed in the second end member 226 of the housing 206. In some implementations, the second end member 226 is also designed as a barrier, such that the apertures 224 have a geometry and arrangement that enable the exit of the air flow but prevent a damage of an external environment in case a power cell 202 fails.

The battery module 200 can further include an air gap between an inner surface of the housing 206 and each of the plurality of power cells 202, in which a thermal insulation material 230 is mounted. For example, the thermal insulation material 230 can be added to a side, top or bottom of the housing 206 to insulate the housing 206 in the event of an internal or external failure to significantly reduce heat transfer in and out of the battery to, for instance, prevent event propagation and/or limit heat flow into the housing 206 from an adjacent housing 206. In some implementations, the thermal insulation material 230 can be a ceramic medium layer, such as an aluminum-oxide ceramic that has a higher heat conductance coefficient than the molding compound of the housing 206. The thermal insulation material 230 can also be characterized by high thermal shock resisting performance to maintain the integrity of the battery module 200, after a failure of a power cell 202 that can induce an abrupt raise in temperature.

As illustrated in FIGS. 2A-2B, a heat shield 240 is positioned along a length of the housing 206 and within the volume 208. The heat shield 240, in this example, extends along the length of the housing 206 between the flame arrestors 212. In alternative examples, the heat shield 240 may be shorter (e.g., extend a length less than that between the flame arrestors 212) or longer (e.g., extend an entire length of the housing 206). Further, although the heat shield 240 is shown on one side of the housing 206, additional heat shields may be positioned within the housing 206 as well (e.g., at or against the housing 206 along all four lengthwise sides). Generally, the heat shield 240 may provide further insulation to heat and/or an additional barrier (along with the housing 206) to combustive fluids from escaping the module 200. For example, the heat shield 240 may be made of a high R-value material and/or non-flammable material with a high melting point and low smoke rating.

As with the battery module 100, although a front and back flame arrestor 212 are shown in this example, alternative implementations may include only one of the flame arrestors 212 (e.g., either the front or the back flame arrestor 212) or may include more than two flame arrestors 212 (e.g., an additional arrestor 212 between the BMS 204 and the second end member 226 or redundant flame arrestors 212 within the housing 206). Generally, each of the flame arrestors 212, like the flame arrestors 112, may include or be a screening member (e.g., mesh, screen, woven material, perforated sheet, porous element, and/or wire pad) that prevents or substantially impedes a flow of combusted fluid (e.g., a flame) from passing therethrough. The flame arrestors 212 may also remove energy from a flow of combusted fluid or flame. The flame arrestor 212 may be made of ceramic, metal, or other material with an appropriate melting point and smoke rating. The screening member includes apertures that allow an uncombusted airflow, such as airflow 214, to pass through while still preventing or impeding a flow of combusted fluid (e.g., electrolyte with or without oxygen). Further, in some aspects, the flame arrestors 212 may be positioned in the housing 206, and the housing 206 may be designed such that sufficient volume is available within the housing to allow substantially complete combustion of the flammable fluid to occur during electrolyte venting (as explained above).

As illustrated in FIGS. 2A-2B, exits of the battery module 200 are minimized and are bounded by the flame arrestors 212. For instance, a front exit (or entrance) to the battery module 200 is the aperture 216 that allows airflow 214 to be circulated into the module 200 by the fan 220. Here, the front flame arrestor 212 forms a pass-through barrier (e.g., to allow airflow but impede combusted fluids) between the aperture 216 and, for instance, the plurality of power cells 202. Also, a back exit (or entrance) to the battery module 200 is the aperture(s) 224 that allows airflow 214 to be circulated out of the module 200 by the fan 220. Here, the back flame arrestor 212 forms a pass-through barrier (e.g., to allow airflow but impede combusted fluids) between the aperture(s) 224 and, for instance, the plurality of power cells 202.

In this illustrated implementation, the flame arrestors 212 include one or more wire holes 232 formed between sides of the arrestors 212, thereby forming a passage from one side of the flame arrestors 212 to opposite sides of the arrestors 212. As illustrated, one or more wires 240, such as from an external connection 234 (e.g., power, data, or otherwise), the fan 220, one or more of the plurality of power cells 202, and/or the BMS 204 may pass through the holes 232 along a length of the module 200. As shown in FIG. 2B, the holes 232 may be formed at one or more heights on the flame arrestors 212. Further, although shown as formed on only one end of each flame arrestor 212, holes 232 may be formed on both ends of a flame arrestor 212, as well as a top and/or bottom portion of a flame arrestor 212.

In this illustrated example, the wires 240 are illustrated as extending a length of the housing 206 with the heat shield 240 between the wires 240 and the side walls of the housing 206. In this manner, the heat shield 240 may protect or help protect the wires 240 from excessive heat and/or flame external to the module 200. In alternative aspects, the heat shield 240 may be positioned (or another heat shield 240 may be added) such that the wires 240 are between the heat shield 240 and the housing 206. In such examples, the wires 240 may also be protected (e.g., by the heat shield 240) against excessive heat and/or flame internal to the module 200.

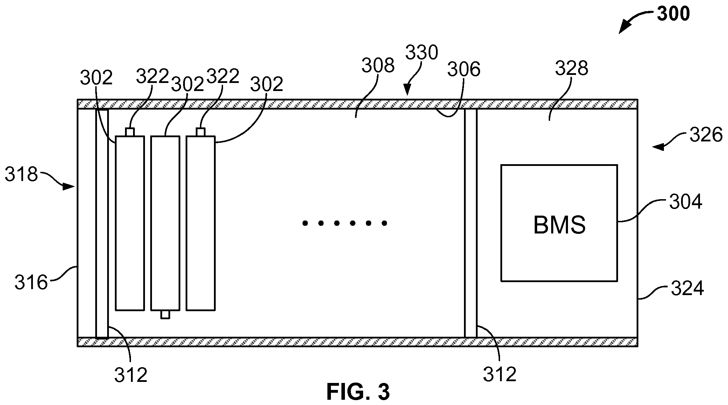

FIG. 3 illustrates a schematic top view of another example battery module 300. In this illustrated example, the battery module 300 may use natural, rather than forced, convection to cool a plurality of power cells 302 and/or a BMS 304. FIG. 3 shows a schematic top view of a battery module 300. In general, the battery module 300 includes and encloses a plurality of power cells 302 and a battery management system (BMS) 304 in a controlled environment. The battery module 300, in some aspects, may maintain the power cells 302 and BMS 304 at particular environmental conditions (e.g., temperature and otherwise), such as ambient conditions, suitable for operation. In some examples, the battery module 300 can be a LiFePO₄ battery pack, a LiCoO₂ battery pack, a LiMnNi battery pack, a LiNiMnCo battery pack, or other suitable battery pack for inclusion in various types of equipment, such as data centers, electric vehicles, and hybrid vehicles. In some examples, each power cell 302 of a suitable battery pack can be a form factor 18650 lithium-ion battery.

The battery module 300 includes a housing 306 that defines an inner volume 308, a plurality of power cells 302 mounted in the inner volume 308 of the housing 306 and flame arrestors 312. The housing 306 can be formed of non-inflammable materials, such as metal alloys having a high melting point. The housing 306 that defines the inner volume 308 also includes an airflow path. The housing 306 receives an outside airflow 314, through an aperture 316 formed in a first end member 318 of the housing 306. The outside airflow 314, in this example, is naturally circulated (e.g., due to a pressure differential) within the inner volume 308. Also, in some examples, module 300 may include a forced circulation airflow 314 generated by one or more fans external to the module 300.

The airflow 314 can move through a front flame arrestor 312 to the inner volume 308. The airflow is circulated around power cells 302 within the inner volume 308. Each power cell 302 has a substantially cylindrical shape defined by a diameter of a body of the power cell 302 and a length of the body. The airflow 314 is circulated past the plurality of power cells 302, through a back flame arrestor 312 and then to an auxiliary volume 328 that encloses the BMS 304. The airflow 314 may then be circulated through one or more apertures 324 of the end member 326 and into an ambient environment.

Each power cell 302 includes a vent member 322 at an end of the power cell 302. The vent member 322 can enable thermal energy dissipation. For example, the vent member 322 may allow for a single release of high internal pressures, which may arise from an internal short circuit of the power cell 302 or from excessive heating of the cell 302. The vent member 322 may also indirectly aid in thermal dissipation, for instance, as a secondary function.

The power cells 302 in this example implementation are directionally mounted in the inner volume 308 such that the vent members 322 face an offset direction relative to at least one of the apertures 316 formed in the first end member 318 or the aperture 324 formed in the second end member 326 of the housing 306. In some implementations, the vent members 322 are oriented oppositely in every other row (or column) so that, for multiple venting accidents, the liquid (e.g., flammable electrolyte) is distributed more evenly within the volume 308 (e.g., and does not pool). This opposite orientation may also facilitate ease of electrical interconnection between the power cells 302. The axis of each body of the power cells 302 can also be substantially orthogonal to the airflow path. The combination of the orientation of the power cells 302 (vents orthogonal to apertures) and the barrier 312 may create a circuitous path for a leaking fluid between the vents and the apertures 324, decreasing the risk of a fluid escaping the housing 306 or reaching BMS 304.

As the airflow is circulated between the power cells 302, heat is transferred from the power cells 302 to the airflow. In some implementations, the power cells 302 can be arranged in a particular configuration that forms spacing between cell bodies. For example a distance of approximately 2-3 mm between adjacent power cells 302 can enable heat transfer from power cells 302 to the air to substantially reduce adjacent cell heating. In some implementations, an amount of heat generated by the power cells 302 and transferred to the airflow may be related to, for example, a temperature of the airflow relative to a temperature of the devices, a flow rate of the airflow, and a density of the power cells 302.

The airflow 314 can exit the inner volume 308 through the back flame arrestor 312 to regulate the temperature in the auxiliary volume 328 that includes BMS 304. BMS 304 is an electronic system that manages the power cells 302, such as by protecting the power cells 302 from operating in critical conditions. BMS 304 can monitor the state of the power cells 302, calculating secondary data, reporting that data, controlling the environment, authenticating data and balancing data. For example, BMS 304 can control the environment of the battery module 300 by monitoring the temperature of the air exhausted from the inner volume 308. The air can exit the auxiliary volume 328 through the apertures 324 formed in the second end member 326 of the housing 306. In some implementations, the second end member 326 is also designed as a barrier, such that the apertures 324 have a geometry and arrangement that enable the exit of the air flow but prevent a damage of an external environment in case a power cell 302 fails.

The battery module 300 can further include an air gap between an inner surface of the housing 306 and each of the plurality of power cells 302, in which a thermal insulation material 330 is mounted. For example, the thermal insulation material 330 can be added to a side, top or bottom of the housing 306 to insulate the housing 306 in the event of an internal or external failure to significantly reduce heat transfer in and out of the battery to, for instance, prevent event propagation and/or limit heat flow into the housing 306 from an adjacent housing 306. In some implementations, the thermal insulation material 330 can be a ceramic medium layer, such as an aluminum-oxide ceramic that has a higher heat conductance coefficient than the molding compound of the housing 306. The thermal insulation material 330 can also be characterized by high thermal shock resisting performance to maintain the integrity of the battery module 300, after a failure of a power cell 302 that can induce an abrupt raise in temperature.

Although a front and back flame arrestor 312 are shown in this example, alternative implementations may include only one of the flame arrestors 312 (e.g., either the front or the back flame arrestor 312) or may include more than two flame arrestors 312 (e.g., an additional arrestor 312 between the BMS 304 and the second end member 326 or redundant flame arrestors 312 within the housing 306). Generally, each of the flame arrestors 312 may include or be a screening member (e.g., mesh, screen, woven material, perforated sheet, porous element, and/or wire pad) that prevents or substantially impedes a flow of combusted fluid (e.g., a flame) from passing therethrough. The flame arrestor 312 may be made of ceramic, metal, or other material with an appropriate melting point and smoke rating. The screening member includes apertures that allow an uncombusted airflow, such as airflow 314, to pass through while still preventing or impeding a flow of combusted fluid. The combusted fluid, in some aspects, may be electrolyte solution from the plurality of power cells 302 that has leaked from the vent members 322 and combusted due to a temperature condition (e.g., overheating) in the module 300. In some aspects, the combusted fluid may also include oxygen (e.g., as an oxidant) in the airflow 314 that combines with the electrolyte solution (e.g., the combustion fuel). The flame arrestor 312 may also remove or absorb energy from the flame or combusted fluid.

In some aspects, the flame arrestors 312 may be positioned in the housing 306, and the housing 306 may be designed such that sufficient volume is available within the housing to allow substantially complete combustion of the flammable fluid to occur during electrolyte venting. For example, by including sufficient volume within the housing (e.g., between the flame arrestors 312) to allow for complete combustion, secondary burning of flammable fluids outside of the boundaries of the housing (and in some aspects outside of the volume bounded by the flame arrestors 312) is minimized or prevented.

As illustrated in FIG. 3, exits of the battery module 300 are minimized and are bounded by the flame arrestors 312. For instance, a front exit (or entrance) to the battery module 300 is the aperture 316 that allows airflow 314 to be circulated into the module 300. Here, the front flame arrestor 312 forms a pass-through barrier (e.g., to allow airflow but impede combusted fluids) between the aperture 316 and, for instance, the plurality of power cells 302. Also, a back exit (or entrance) to the battery module 300 is the aperture(s) 324 that allows airflow 314 to be circulated out of the module 300. Here, the back flame arrestor 312 forms a pass-through barrier (e.g., to allow airflow but impede combusted fluids) between the aperture(s) 324 and, for instance, the plurality of power cells 302.

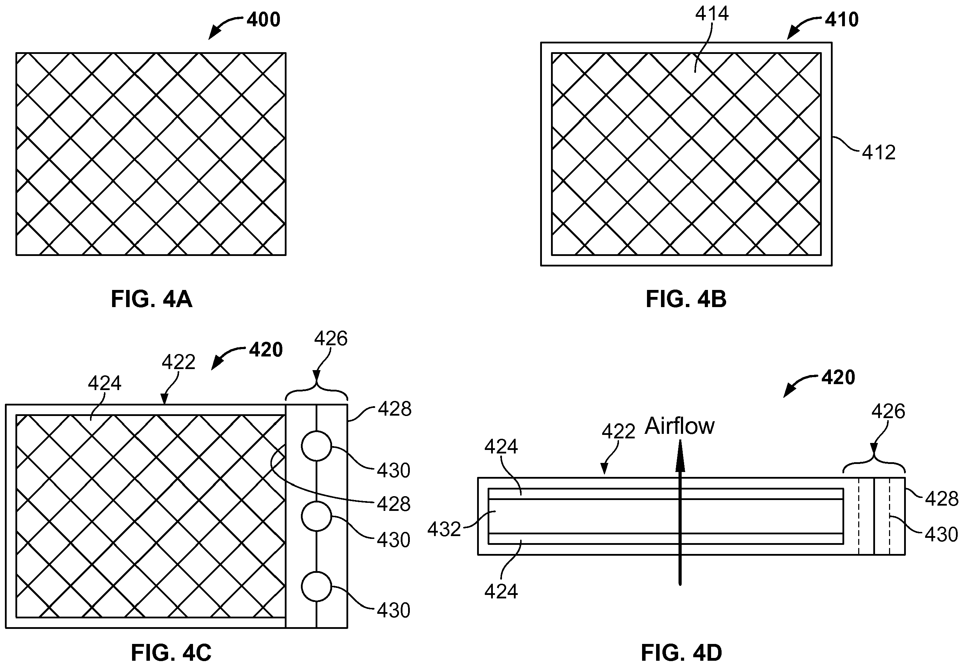

FIGS. 4A-4D illustrate example implementations of a flame arrestor sub-assembly used in a battery module. Each of the illustrated flame arrestor sub-assemblies shown may be used, for instance, as one or more of the flame arrestors 112/212/312 described above. FIG. 4A shows a particular example implementation of a flame arrestor sub-assembly 400. In this example, the flame arrestor sub-assembly 400 may consist simply of a screen or mesh member (e.g., a woven material, perforated sheet, porous element, and/or wire pad). The flame arrestor sub-assembly 400 may be rigid and attachable, for instance, to a housing of a battery module. The flame arrestor sub-assembly 400, as shown, includes multiple apertures, which may be sized to permit uncombusted airflow therethrough while impeding or preventing combusted fluid (e.g., flames) from flowing therethrough. The flame arrestor sub-assembly 400 may be made from ceramic or metal or other materials, which include materials with high melting points, low combustibility, and/or low smoke generation properties. Thus, the flame arrestor sub-assembly 400 may remove energy from a combusted fluid or flame to help impede or prevent a spread of the flame.

FIG. 4B shows another example implementation of a flame arrestor sub-assembly 410. The flame arrestor sub-assembly 410 includes a screen member 414 enclosed within a frame 412. The screen member 414 may be substantially similar to the flame arrestor sub-assembly 400. The frame 412 may rigidly enclose the screen member 414 and be attachable, for instance, to a housing or other component of a battery module described herein. In some aspects, the frame 412 may enclose multiple screen members 414, mounted in series (e.g., relative to a flow of air or fluid therethrough) within the frame 412. In some aspects, each of the screen members 414 may have distinct characteristics, such as aperture size or mesh thickness, material, or otherwise. For instance, one screen member 414 may be relatively fine compared to another screen member 414, thereby providing differing barriers to a flow of combusted fluid therethrough, while still allowing airflow therethrough.

FIG. 4C shows another example implementation of a flame arrestor sub-assembly 420. The flame arrestor sub-assembly 420 includes a screen member 424 enclosed within a frame 422. The screen member 424 may be substantially similar to the flame arrestor sub-assembly 400. The frame 422 may rigidly enclose the screen member 424 and be attachable, for instance, to a housing or other component of a battery module described herein. As with flame arrestor sub-assembly 410, in some aspects, the frame 422 may enclose multiple screen members 424, mounted in series (e.g., relative to a flow of air or fluid therethrough) within the frame 422 as shown in FIG. 4D, which is a top view of the flame arrestor sub-assembly 420. As shown in FIG. 4D, a portion 432 of the frame 422 may be positioned between the two screen members 422, thereby providing, for instance, structural rigidity to the flame arrestor sub-assembly 420.

In some aspects, each of the screen members 424 may have distinct characteristics, such as aperture size or mesh thickness, material, or otherwise. For instance, one screen member 424 may be relatively fine compared to another screen member 424, thereby providing differing barriers to a flow of combusted fluid therethrough, while still allowing airflow therethrough (as illustrated).

As illustrated, the frame 422 includes a side portion 426 that includes two halves 428. In the illustrated example with the two halves 428 fit (e.g., attached or coupled) together, wire holes 430 are formed. Additional portions of the frame 422 (e.g., on a side opposite the side portion 426) may also be split or otherwise designed to form one or more wire holes 430.

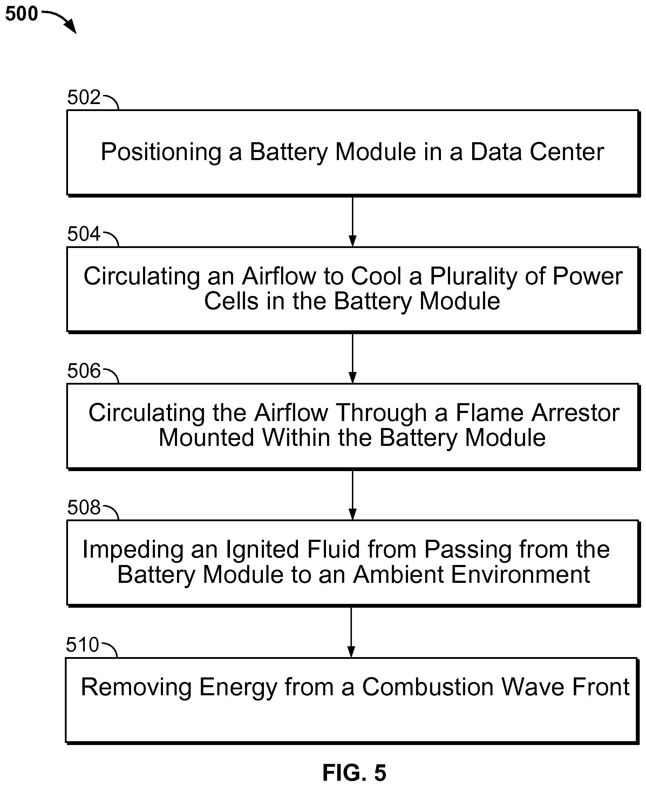

FIG. 5 illustrates a flow chart for a method 500 of managing a combustion event in a battery module. In some aspects, method 500 may be implemented with one or more of the battery modules 100, 200, and/or 300, or other battery modules within the scope of the present disclosure. Method 500 includes the step of positioning a battery module in a date center (502).

For example, a battery module, such as one or more implementations of a battery module described herein, may be used to power (e.g., primary or secondary power) electronic devices (e.g., servers, processors, memory, networking devices, and otherwise) supported in server racks, on motherboards, or otherwise. In some examples, one or more battery modules may be mounted in or adjacent a server rack with the electronic devices.

Method 500 also includes the step of circulating an airflow to cool a plurality of power cells in the battery module (504). In some aspects, a fan, internal and/or external to the module, may circulate an airflow through openings in one end of the battery module, through an airflow path to cool the power cells and/or other heat generating components (e.g., a battery management system), and out of the battery module through openings in another end of the battery module. In some aspects, natural convection may be used to flow a cooling airflow through the battery module.

Method 500 also includes the step of circulating the airflow through a flame arrestor mounted within the battery module (506). For example, during normal operation of the battery module (e.g., without a combustion event occurrence), airflow may pass through one or more flame arrestors mounted within the battery module. The flame arrestors include a screen, mesh, or porous member that allows airflow therethrough. Thus, during normal operation of the battery module, the flame arrestors mounted in the battery module may have no or negligible effect on the flow of a cooling airflow to cool the power cells.

Method 500 also includes the step of impeding an ignited fluid from passing from the battery module to an ambient environment (508). For instance, a combustion even may occur within the battery module or external to the battery module. The combustion even may be the occurrence, within or external to the battery module, of a high temperature event, which causes one or more flammable fluids to combust. The flammable fluids may include, for instance, electrolyte solution contained in the power cells, which may exit each power cell mounted in the battery module through a vent member. Thus, during an example combustion event scenario, vented electrolyte solution may combust within the battery module, thereby forming a combusted fluid (e.g., flames) within the module. In some aspects, due to arrangement of the power cells and the flame arrestors within a volume of the battery module, the combusted fluid may only exit the battery module through the flame arrestors. The flame arrestors, in step 508, may impede or prevent the combusted fluid and/or flames from flowing therethrough, thereby containing the combusted fluid and/or flames within the battery module.

Method 500 also includes the step of removing energy from a combustion wave front (510). For instance, the ignited fluid may generate a combustion wave front, or flame front, that can, if unimpeded, extend beyond a battery module. As the flame arrestors may be at a lower temperature, or may be good thermal conductors, energy (e.g., heat) from the combustion flame front may be transferred from the combustion flame front to the flame arrestors. As energy is transferred, and an amount of energy in the combustion flame front is decreased, the combustion flame front may be impeded or decreased.

A number of examples have been described. Nevertheless, it will be understood that various modifications may be made. For example, the overall airflow can be right-to-left as well in a "pull cooling system" (compared with the drawings which are left-to-right airflow and a "push cooling system"). A pull system is sometimes referred to as a "negative pressure cooling system" and a push system is sometimes referred to as a "positive pressure cooling system." Like any type of potential field effect, it is the gradient that directs the flow. Further, for example, the steps of the exemplary flow chart in FIG. 5 may be performed in other orders, some steps may be removed, and other steps may be added. As another example, a battery module (e.g., battery module 100 or otherwise) may include airflow openings on sides or tops in addition to, or in place of, airflow openings on ends. Accordingly, other examples are within the scope of the following claims.

## Claims

1. A battery module (100, 200, 300), comprising:
a housing (106, 206, 306) that defines an inner volume (108, 208, 308) and comprises an airflow path from an aperture (116, 216, 316) formed in a first end member (118, 218, 318) of the housing, through the inner volume, and to an aperture (124, 224, 324) formed in a second end member (126, 226, 326) of the housing;
a plurality of power cells (102, 202, 302) mounted in the inner volume (108, 208, 308) of the housing (106, 206, 306), each of the power cells comprising a vent member (122, 222, 322) at an end of the power cell; and
a flame arrestor (112, 212, 312) mounted across the airflow path and between the plurality of power cells (102, 202, 302) and the aperture (124, 224, 324) formed in the second end member (126, 226, 326) of the housing (106, 206, 306), the flame arrestor comprising a screen (414, 424) that comprises a plurality of fluid pathways sized to allow an airflow from the airflow path through the fluid pathways and sized to impede a combusted fluid to pass therethrough.

2. The battery module (100, 200, 300) of claim 1, further comprising a fan (120, 220) mounted in the housing (106, 206, 306) to circulate the airflow between the aperture (116, 216, 316) formed in the first end member (118, 218, 318) of the housing and the aperture (124, 224, 324) formed in a second end member (126, 226, 326) of the housing.

3. The battery module (100, 200, 300) of claim 1, wherein the plurality of power cells (102, 202, 302) are directionally mounted in the inner volume (108, 208, 308) such that the vent members (122, 222, 322) face an offset direction relative to at least one of the aperture (116, 216, 316) formed in the first end member (118, 218, 318) or the aperture (124, 224, 324) formed in the second end member (126, 226, 326) of the housing (106, 206, 306).

4. The battery module (100, 200, 300) of claim 1, wherein the flame arrestor (112, 212, 312) further comprises a frame (412, 422) that is attachable to the housing (106, 206, 306), the screen (414, 424) mounted within the frame,
optionally wherein the frame (422) comprises a through hole (430) that forms a cable pathway between sides of the flame arrestor (112, 212, 312).

5. The battery module (100, 200, 300) of claim 4, wherein the screen comprises a first screen, the flame arrestor (112, 212, 312) further comprising a second screen mounted within the frame (422) in substantial parallel with the first screen,
optionally wherein the second screen comprises a plurality of second fluid pathways, and at least a portion of the second fluid pathways are different sizes than a portion of the fluid pathways of the first screen.

6. The battery module (100, 200, 300) of claim 1, wherein the flame arrestor (112, 212, 312) comprises a first flame arrestor, the module further comprising a second flame arrestor mounted across the airflow path and between the plurality of power cells (102, 202, 302) and the aperture (116, 216, 316) formed in the first end member (118, 218, 318) of the housing, the second flame arrestor comprising a screen that comprises a plurality of fluid pathways sized to allow an airflow from the airflow path through the fluid pathways and sized to impede a combusted fluid to pass therethrough.

7. The battery module (100, 200, 300) of claim 1, wherein the plurality of power cells (102, 202, 302) comprise a plurality of lithium-ion batteries,
optionally wherein each of the lithium-ion batteries comprises a form factor 18650 lithium-ion battery.

8. A method of managing a combustion event in a battery module (100, 200, 300), comprising:
positioning a battery module (100, 200, 300) in a data center, the battery module comprising a housing (106, 206, 306) with a first end member (118, 218, 318) and a second end member (126, 226, 326), and a plurality of power cells (102, 202, 302) mounted in the housing, each of the power cells comprising a vent member (122, 222, 322) at an end of the power cell;
circulating an airflow from an aperture (116, 216, 316) in the first end member (118, 218, 318), through an inner volume (108, 208, 308) of the housing (106, 206, 306) to cool the plurality of power cells (102, 202, 302), and to an aperture (124, 224, 324) in the second end member (126, 226, 326);
circulating the airflow through a flame arrestor (112, 212, 312) mounted within the housing (106, 206, 306) and between the plurality of power cells (102, 202, 302) and the aperture (124, 224, 324) formed in the second end member (126, 226, 326) of the housing; and
impeding, with the flame arrestor (112, 212, 312), a combusted fluid from passing through the housing (106, 206, 306) to an ambient environment in the data center.

9. The method of claim 8, further comprising circulating the airflow with a fan (120, 220) mounted in the housing (106, 206, 306),
or alternatively wherein the airflow is circulated through natural convection.

10. The method of claim 8, wherein circulating the airflow through a flame arrestor (112, 212, 312) comprises circulating the airflow through a screen mounted within a frame of the flame arrestor,
optionally wherein the screen comprises a first screen, the method further comprising circulating the airflow through a second screen mounted within the frame substantial parallel with the first screen.

11. The method of claim 8, wherein the flame arrestor (112, 212, 312) comprises a first flame arrestor, the method further comprising:
circulating the airflow through a second flame arrestor mounted within the housing (106, 206, 306) and between the plurality of power cells (102, 202, 302) and the aperture (116, 216, 316) formed in the first end member (118, 218, 318) of the housing; and
impeding, with the second flame arrestor, the combusted fluid from passing through the housing (106, 206, 306) to the ambient environment in the data center.

12. A power system, comprising:
a plurality of battery modules (100, 200, 300) as claimed in claims 1-7 electrically coupled to form a power unit configured to provide electrical power to a plurality of rack-mounted electronic devices in a data center, at least one of the battery modules comprising:
a case at least partially open to an ambient environment on ends of the case and defining a fluid path between the ends of the case;
a plurality of power cells (102, 202, 302) mounted in the case;
a fan (120, 220) mounted in the case to circulate an airflow through the fluid path to cool the plurality of power cells (102, 202, 302); and
a first screen mounted across the fluid path and between the plurality of power cells (102, 202, 302) and one of the ends of the case, the first screen comprising a plurality of openings sized to allow the airflow to pass therethrough and impede a combusted fluid to pass therethrough.

13. The power system of claim 12, wherein the battery module (100, 200, 300) further comprises a second screen mounted across the fluid path and between the plurality of power cells (102, 202, 302) and the other of the ends of the case, the second screen comprising a plurality of openings sized to allow the airflow to pass therethrough and impede the combusted fluid to pass therethrough.

14. The power system of claim 12, wherein the battery module (100, 200, 300) further comprises a heat shield (240) positioned within the fluid path and extending between the ends of the case,
optionally wherein the heat shield (240) extends between the first and second screens within the case.

15. The power system of claim 12, wherein the battery module (100, 200, 300) further comprises a battery management system (304) positioned within the fluid path between the first screen and the one of the ends of the case.

## Patentansprüche

1. Batteriemodul (100, 200, 300), umfassend:
ein Gehäuse (106, 206, 306), das ein inneres Volumen (108, 208, 308) definiert, und das einen Luftstrompfad von einer Öffnung (116, 216, 316), die in einem ersten Endelement (118, 218, 318) des Gehäuses gebildet ist, durch das innere Volumen und bis zu einer Öffnung (124, 224, 324) umfasst, die in einem zweiten Endelement (126, 226, 326) des Gehäuses gebildet ist;
eine Mehrzahl von Energiezellen (102, 202, 302), die in dem inneren Volumen (108, 208, 308) des Gehäuses (106, 206, 306) montiert sind, wobei jede der Energiezellen ein Lüftungselement (122, 222, 322) an einem Ende der Energiezelle umfasst; und
eine Flammensperre (112, 212, 312), die über den Luftstrompfad hinweg und zwischen der Mehrzahl von Energiezellen (102, 202, 302) und der Öffnung (124, 224, 324) montiert ist, die in dem zweiten Endelement (126, 226, 326) des Gehäuses (106, 206, 306) gebildet ist, wobei die Flammensperre einen Schirm (414, 424) umfasst, der eine Mehrzahl von Fluidpfaden umfasst, die derart dimensioniert sind, dass ein Luftstrom von dem Luftstrompfad durch die Fluidpfade ermöglicht wird, und derart bemessen sind, dass ein Hindurchtreten eines verbrannten Fluids verhindert wird.

2. Batteriemodul (100, 200, 300) nach Anspruch 1, ferner umfassend einen Lüfter (120, 220), der in dem Gehäuse (106, 206, 306) montiert ist, um den Luftstrom zu zirkulieren zwischen der Öffnung (116, 216, 316), die in dem ersten Endelement (118, 218, 318) des Gehäuses gebildet ist, und der Öffnung (124, 224, 324), die in einem zweiten Endelement (126, 226, 326) des Gehäuses gebildet ist.

3. Batteriemodul (100, 200, 300) nach Anspruch 1, wobei die Mehrzahl von Energiezellen (102, 202, 302) gerichtet in dem inneren Volumen (108, 208, 308) derart montiert sind, dass die Lüftungselemente (122, 222, 322) einer Versatzrichtung relativ zu der Öffnung (116, 216, 316), die in dem ersten Endelement (118, 218, 318) gebildet ist, und/oder der Öffnung (124, 224, 324) gegenüber stehen, die in dem zweiten Endelement (126, 226, 326) des Gehäuses (106, 206, 306) gebildet ist.

4. Batteriemodul (100, 200, 300) nach Anspruch 1, wobei die Flammensperre (112, 212, 312) ferner einen Rahmen (412, 422) umfasst, der an dem Gehäuse (106, 206, 306) anbringbar ist, wobei der Schirm (414, 424) innerhalb des Rahmens montiert ist,
wobei optional der Rahmen (422) ein Durchgangsloch (430) umfasst, das einen Kabelpfad zwischen Seiten der Flammensperre (112, 212, 312) bildet.

5. Batteriemodul (100, 200, 300) nach Anspruch 4, wobei der Schirm einen ersten Schirm umfasst, wobei die Flammensperre (112, 212, 312) ferner einen zweiten Schirm umfasst, der innerhalb des Rahmens (422) im Wesentlichen parallel zu dem ersten Schirm montiert ist,
wobei optional der zweite Schirm eine Mehrzahl von zweiten Fluidpfaden umfasst, und wobei wenigstens ein Teil der zweiten Fluidpfade andere Größen haben als ein Teil der Fluidpfade des ersten Schirms.

6. Batteriemodul (100, 200, 300) nach Anspruch 1, wobei die Flammensperre (112, 212, 312) eine erste Flammensperre umfasst, wobei das Modul ferner eine zweite Flammensperre umfasst, die über den Luftstrompfad hinweg und zwischen der Mehrzahl von Energiezellen (102, 202, 302) und der Öffnung (116, 216, 316) montiert ist, die in dem ersten Endelement (118, 218, 318) des Gehäuses gebildet ist, wobei die zweite Flammensperre einen Schirm umfasst, der eine Mehrzahl von Fluidpfaden umfasst, die derart bemessen sind, dass ein Luftstrom von dem Luftstrompfad durch die Fluidpfade ermöglicht wird, und derart bemessen sind, dass ein Hindurchtreten eines verbrannten Fluids verhindert wird.

7. Batteriemodul (100, 200, 300) nach Anspruch 1, wobei die Mehrzahl von Energiezellen (102, 202, 302) eine Mehrzahl von Lithiumionenbatterien umfasst,
wobei optional jeder der Lithiumionenbatterien eine Lithiumionenbatterie mit Formfaktor 18650 umfasst.

8. Verfahren zum Verwalten eines Verbrennungsereignisses in einem Batteriemodul (100, 200, 300), umfassend:
Positionieren eines Batteriemoduls (100, 200, 300) in einem Datenzentrum, wobei das Batteriemodul ein Gehäuse (106, 206, 306) mit einem ersten Endelement (118, 218, 318) und einem zweiten Endelement (126, 226, 326) umfasst, sowie eine Mehrzahl von Energiezellen (102, 202, 302), die in dem Gehäuse montiert sind, wobei jede der Energiezellen ein Lüftungselement (122, 222, 324) an einem Ende der Energiezelle umfasst;
Zirkulieren eines Luftstroms von einer Öffnung (116, 216, 316) in dem ersten Endelement (118, 218, 318) durch ein inneres Volumen (108, 208, 308) des Gehäuses (106, 206, 306) zum Kühlen der Mehrzahl von Energiezellen (102, 202, 302) und bis zu einer Öffnung (124, 224, 324) in dem zweiten Endelement (126, 226, 326);
Zirkulieren des Luftstroms durch eine Flammensperre (112, 212, 312), die innerhalb des Gehäuses (106, 206, 306) und zwischen der Mehrzahl von Energiezellen (102, 202, 302) und der Öffnung (124, 224, 324) montiert ist, die in dem zweiten Endelement (126, 226, 326) des Gehäuses gebildet ist; und
Verhindern, mit der Flammensperre (112, 212, 312), dass ein verbranntes Fluid durch das Gehäuse (106, 206, 306) zu einer Außenumgebung in dem Datenzentrum hindurch tritt.

9. Verfahren nach Anspruch 8, ferner umfassend ein Zirkulieren des Luftstroms mit einem Lüfter (120, 220), der in dem Gehäuse (106, 206, 306) montiert ist,
oder alternativ wobei der Luftstrom durch natürliche Konvektion zirkuliert wird.

10. Verfahren nach Anspruch 8, wobei das Zirkulieren des Luftstroms durch eine Flammensperre (112, 212, 312) ein Zirkulieren des Luftstroms durch einen Schirm umfasst, der innerhalb eines Rahmens der Flammensperre montiert ist,
wobei optional der Schirm einen ersten Schirm umfasst, wobei das Verfahren ein Zirkulieren des Luftstroms durch einen zweiten Schirm umfasst, der innerhalb des Rahmens im Wesentlichen parallel zu dem ersten Schirm montiert ist.

11. Verfahren nach Anspruch 8, wobei die Flammensperre (112, 212, 312) eine erste Flammensperre umfasst, wobei das Verfahren ferner umfasst:
Zirkulieren des Luftstroms durch eine zweite Flammensperre, die innerhalb des Gehäuses (106, 206, 306) und zwischen der Mehrzahl von Energiezellen (102, 202, 302) und der Öffnung (116, 216, 316) montiert ist, die in dem ersten Endelement (118, 218, 318) des Gehäuses gebildet ist; und
Verhindern, mit der zweiten Flammensperre, dass das verbrannte Fluid durch das Gehäuse (106, 206, 306) zu der Außenumgebung in dem Datenzentrum hindurch tritt.

12. Energiesystem, umfassend:
eine Mehrzahl von Batteriemodulen (100, 200, 300) wie in den Ansprüchen 1 bis 7 beansprucht, die elektrisch gekoppelt sind, um eine Energieeinheit zu bilden, die dazu ausgelegt ist, elektrische Energie an eine Mehrzahl von gestellmontierten elektronischen Vorrichtungen in einem Datenzentrum bereit zu stellen, wobei wenigstens eines der Batteriemodule umfasst:
ein Gehäuse, das wenigstens teilweise zu einer Außenumgebung an Enden des Gehäuses offen ist und das einen Fluidpfad zwischen den Enden des Gehäuses definiert;
eine Mehrzahl von Energiezellen (102, 202, 302), die in dem Gehäuse montiert sind;
einen Lüfter (120, 220), der in dem Gehäuse montiert ist, um einen Luftstrom durch den Fluidpfad zum Kühlen der Mehrzahl von Energiezellen (102, 202, 302) zu zirkulieren; und
einen ersten Schirm, der über dem Fluidpfad hinweg und zwischen der Mehrzahl von Energiezellen (102, 202, 302) und einem der Enden des Gehäuses montiert ist, wobei der erste Schirm ein Mehrzahl von Öffnungen umfasst, die derart bemessen sind, dass der Luftstrom hindurchtreten kann und ein Hindurchtreten eines verbrannten Fluids verhindert wird.

13. Energiesystem nach Anspruch 12, wobei das Batteriemodul (100, 200, 300) ferner einen zweiten Schirm umfasst, der über den Fluidpfad hinweg und zwischen der Mehrzahl von Energiezellen (102, 202, 302) und dem anderen der Enden des Gehäuses montiert ist, wobei der zweite Schirm eine Mehrzahl von Öffnungen umfasst, die derart bemessen sind, dass der Luftstrom hindurch treten kann und ein Hindurchtreten des verbrannten Fluids verhindert wird.

14. Energiesystem nach Anspruch 12, wobei das Batteriemodul (100, 200, 300) ferner einen Hitzeschild (240) umfasst, der innerhalb des Fluidpfads positioniert ist und sich zwischen den Enden des Gehäuses erstreckt,
wobei optional der Hitzeschild (240) sich zwischen dem ersten und dem zweiten Schirm innerhalb des Gehäuses erstreckt.

15. Energiesystem nach Anspruch 12, wobei das Batteriemodul (100, 200, 300) ferner ein Batterieverwaltungssystem (304) umfasst, das innerhalb des Fluidpfads zwischen dem ersten Schirm und dem einen der Enden des Gehäuses positioniert ist.

## Revendications

1. Module de batterie (100, 200, 300), comprenant :
un boîtier (106, 206, 306) qui définit un volume intérieur (108, 208, 308) et comprend un trajet d'écoulement d'air d'une ouverture (116, 216, 316) formée dans un premier élément d'extrémité (118, 218, 318) du boîtier, à travers le volume intérieur et à une ouverture (124, 224, 324) formée dans un deuxième élément d'extrémité (126, 226, 326) du boîtier ;
une pluralité de cellules de puissance (102, 202, 302) montées dans le volume intérieur (108, 208, 308) du boîtier (106, 206, 306), chacune des cellules de puissance comprenant un élément d'évent (122, 222, 322) à une extrémité de la cellule de puissance ; et
un pare-flamme (112, 212, 312) monté en travers du trajet d'écoulement d'air et entre la pluralité de cellules de puissance (102, 202, 302) et l'ouverture (124, 224, 324) formée dans le deuxième élément d'extrémité (126, 226, 326) du boîtier (106, 206, 306), le pare-flamme comprenant un écran (414, 424) qui comprend une pluralité de trajectoires de fluide dimensionnées pour permettre à l'écoulement d'air du trajet d'écoulement d'air de passer à travers les trajectoires de fluide et dimensionnées pour entraver un fluide brûlé d'y passer à travers.

2. Module de batterie (100, 200, 300) selon la revendication 1, comprenant en outre un ventilateur (120, 220) monté dans le boîtier (106, 206, 306) pour faire circuler l'écoulement d'air entre l'ouverture (116, 216, 316) formée dans le premier élément d'extrémité (118, 218, 318) du boîtier et l'ouverture (124, 224, 324) formée dans un deuxième élément d'extrémité (126, 226, 326) du boîtier.

3. Module de batterie (100, 200, 300) selon la revendication 1, dans lequel la pluralité de cellules de puissance (102, 202, 302) sont montées de manière directionnelle dans le volume intérieur (108, 208, 308) de sorte que les éléments d'évent (122, 222, 322) sont orientés dans une direction décalée par rapport à au moins une parmi l'ouverture (116, 216, 316) formée dans le premier élément d'extrémité (118, 218, 318) ou l'ouverture (124, 224, 324) formée dans le deuxième élément d'extrémité (126, 226, 326) du boîtier (106, 206, 306).

4. Module de batterie (100, 200, 300) selon la revendication 1, dans lequel le pare-flamme (112, 212, 312) comprend en outre un cadre (412, 422) qui peut être attaché au boîtier (106, 206, 306), l'écran (414, 424) monté à l'intérieur du cadre,
facultativement dans lequel le cadre (422) comprend un trou traversant (430) qui forme un trajet de câble entre les côtés du pare-flamme (112, 212, 312).

5. Module de batterie (100, 200, 300) selon la revendication 4, dans lequel l'écran comprend un premier écran, le pare-flamme (112, 212, 312) comprenant en outre un deuxième écran monté à l'intérieur du cadre (422) sensiblement parallèle au premier écran,
facultativement dans lequel le deuxième écran comprend une pluralité de deuxième trajectoires de fluide, et au moins une partie des deuxièmes trajectoires de fluide ont des tailles différentes par rapport à une partie des trajectoires de fluide du premier écran.

6. Module de batterie (100, 200, 300) selon la revendication 1, dans lequel le pare-flamme (112, 212, 312) comprend un premier pare-flamme, le module comprenant en outre un deuxième pare-flamme monté en travers du trajet d'écoulement d'air et entre la pluralité de cellules de puissance (102, 202, 302) et l'ouverture (116, 216, 316) formée dans le premier élément d'extrémité (118, 218, 318) du boîtier, le deuxième pare-flamme comprenant un écran qui comprend une pluralité de trajectoires de fluide dimensionnées pour permettre à l'écoulement d'air du trajet d'écoulement d'air de passer à travers les trajectoires de fluide et dimensionnées pour entraver un fluide brûlé d'y passer à travers.

7. Module de batterie (100, 200, 300) selon la revendication 1, dans lequel la pluralité de cellules de puissance (102, 202, 302) comprennent une pluralité de batteries au lithium-ion,
facultativement dans lequel chacune des batteries au lithium-ion comprend une batterie au lithium-ion de facteur de forme 18650.

8. Procédé pour la gestion d'un événement de combustion dans un module de batterie (100, 200, 300), comprenant :
le positionnement d'un module de batterie (100, 200, 300) dans un centre de données, le module de batterie comprenant un boîtier (106, 206, 306) avec un premier élément d'extrémité (118, 218, 318) et un deuxième élément d'extrémité (126, 226, 326), et une pluralité de cellules de puissance (102, 202, 302) montées dans le boîtier, chacune des cellules de puissance comprenant un élément d'évent (122, 222, 322) à une extrémité de la cellule de puissance ;
la circulation d'un écoulement d'air d'une ouverture (116, 216, 316) dans le premier élément d'extrémité (118, 218, 318), à travers un volume intérieur (108, 208, 308) du boîtier (106, 206, 306) pour refroidir la pluralité de cellules de puissance (102, 202, 302), et à une ouverture (124, 224, 324) dans le deuxième élément d'extrémité (126, 226, 326) ;
la circulation de l'écoulement d'air à travers un pare-flamme (112, 212, 312) monté à l'intérieur du boîtier (106, 206, 306) et entre la pluralité de cellules de puissance (102, 202, 302) et l'ouverture (124, 224, 324) formée dans le deuxième élément d'extrémité (126, 226, 326) du boîtier ; et
l'empêchement, avec le pare-flamme (112, 212, 312), d'un fluide brûlé de passer à travers le boîtier (106, 206, 306) vers un environnement ambiant dans le centre de données.

9. Procédé selon la revendication 8, comprenant en outre la circulation de l'écoulement d'air avec un ventilateur (120, 220) monté dans le boîtier (106, 206, 306),
ou de manière alternative dans lequel l'écoulement d'air circule via convection naturelle.

10. Procédé selon la revendication 8, dans lequel la circulation de l'écoulement d'air à travers un pare-flamme (112, 212, 312) comprend la circulation de l'écoulement d'air à travers un écran monté à l'intérieur d'un cadre du pare-flamme,
facultativement dans lequel l'écran comprend un premier écran, le procédé comprenant en outre la circulation de l'écoulement d'air à travers un deuxième écran monté à l'intérieur du cadre sensiblement parallèle au premier écran.

11. Procédé selon la revendication 8, dans lequel le pare-flamme (112, 212, 312) comprend un premier pare-flamme, le procédé comprenant en outre :
la circulation de l'écoulement d'air à travers un deuxième pare-flamme monté à l'intérieur du boîtier (106, 206, 306) et entre la pluralité de cellules de puissance (102, 202, 302) et l'ouverture (116, 216, 316) formée dans le premier élément d'extrémité (118, 218, 318) du boîtier ; et
l'empêchement, avec le deuxième pare-flamme, du fluide brûlé de passer à travers le boîtier (106, 206, 306) vers un environnement ambiant dans le centre de données.

12. Système d'alimentation, comprenant :
une pluralité de modules de batterie (100, 200, 300) selon les revendications 1-7, couplées électriquement afin de former une unité de puissance configurée pour fournir une puissance électrique à une pluralité de dispositifs électroniques montés en rack dans un centre de données, au moins un parmi les modules de batterie comprenant :
une boîte au moins ouverte partiellement à un environnement ambiant sur les extrémités de la boîte et définissant une trajectoire du fluide entre les extrémités de la boîte ;
une pluralité de cellules de puissance (102, 202, 302) montées dans la boîte ;
un ventilateur (120, 220) monté dans la boîte pour faire circuler un écoulement d'air à travers la trajectoire du fluide pour refroidir la pluralité de cellules de puissance (102, 202, 302) ; et
un premier écran monté en travers de la trajectoire du fluide et entre la pluralité de cellules de puissance (102, 202, 302) et une parmi les extrémités de la boîte, le premier écran comprenant une pluralité d'ouvertures dimensionnées pour permettre à l'écoulement d'air d'y passer à travers et empêcher un fluide brûlé d'y passer à travers.

13. Système d'alimentation selon la revendication 12, dans lequel le module de batterie (100, 200, 300) comprend en outre un deuxième écran monté en travers de la trajectoire du fluide et entre la pluralité de cellules de puissance (102, 202, 302) et l'autre extrémité parmi les extrémités de la boîte, le deuxième écran comprenant une pluralité d'ouvertures dimensionnées pour permettre à l'écoulement d'air d'y passer à travers et empêcher le fluide brûlé d'y passer à travers.

14. Système d'alimentation selon la revendication 12, dans lequel le module de batterie (100, 200, 300) comprend en outre un bouclier thermique (240) positionné dans la trajectoire du fluide et s'étendant entre les extrémités de la boîte,
facultativement dans lequel le bouclier thermique (240) s'étend entre les premier et deuxième écrans dans la boîte.

15. Système d'alimentation selon la revendication 12, dans lequel le module de batterie (100, 200, 300) comprend en outre un système de gestion de batterie (304) positionné dans la trajectoire du fluide entre le premier écran et l'une des extrémités de la boîte.
